(19) Europäisches Patentamt
European Patent Office
Office européen des brevets

(11) EP 2 273 725 A2

(12) EUROPEAN PATENT APPLICATION

(43) Date of publication:
12.01.2011 Bulletin 2011/02

(51) Int Cl.:
*H04L 12/24* (2006.01)

(21) Application number: 10006569.7

(22) Date of filing: 24.06.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 08.07.2009 US 499188

(71) Applicant: Telefonaktiebolaget L M Ericsson
(PUBL)
S-164 83 Stockholm (SE)

(72) Inventor: Soulhi, Said
Saint Constant J5A 2K5 (CA)

(74) Representative: Mohsler, Gabriele et al
Ericsson GmbH
Patent Department
Ericsson Allee 1
52134 Herzogenrath (DE)

(54) **Systems and methods for self-organizing networks using dynamic policies and situation semantics**

(57) Communication nodes, systems and methods are described which manage and process management information using dynamic semantic variable entities governed by a formal logic and upon which computations can be performed. Such semantic variable entities include, for example, management infons and or management situations which can be used, for example, to manage policy enforcement in communication networks. Action logic is amalgamated with static situation semantics to enable dynamic policy enforcement in such networks.

FIG. 2

EP 2 273 725 A2

**Description**

**TECHNICAL FIELD**

The present invention generally relates to managing dynamic policies and/or workflows which control network resources in communications networks, and, more particularly, to situation semantics based management of such dynamic policies and/or workflows in self-organizing networks.

**BACKGROUND**

Communication systems continue to grow and evolve. Convergence between different types of communication systems, e.g., Internet Protocol (IP), connection-based voice communications, and the like, is advancing rapidly. Recently the phrase "Next Generation Network" (NGN) has been used to describe various activities associated with this evolution. As defined by the International Telecommunications Union (ITU), an NGN is a packet-based network able to provide services (including telecommunication services) and able to make use of multiple broadband, QoS-enabled transport technologies and in which service-related functions are independent from underlying transport-related technologies. NGNs will also likely offer unrestricted access by users to different service providers and will support generalized mobility, which in turn will provide for consistent service provision to end users.

Various standardization groups are working on reaching a consensus regarding the technology considerations which will affect NGN design and implementation. For example, Telecoms & Internet converged Services & Protocols for Advanced Networks (TISPAN) is an ETSI standardization group which focuses on convergence of technologies used in the Internet and other fixed networks. Among other things, TISPAN seeks to provide a modular, subsystem-oriented architecture which facilitates the addition of new subsystems over time to cover new demands and service classes. The TISPAN architecture attempts to ensure that network resources, applications, and user equipment are common to all of the various subsystems to provide for enhanced mobility across, for example, administrative boundaries.

One of the TISPAN subsystems is referred to as the Network Attachment Sub System (NASS). The NASS is responsible for, among other things, handling configuration information, user authentication data, IP address allocation and registering associations between IP addresses allocated to user equipment (UE) and related network location information. These latter two NASS functions, i.e., allocating IP addresses and registering associations, are handled by the Network Access Configuration Function (NACF) and the Connectivity Session Location and Repository Function (CLF), respectively, which are functional entities that are also specified by the NASS portion of the TISPAN standards.

These NASS functional entities interact with another TISPAN subsystem known as the Resource Admission Control Subsystem (RACS) and, of particular interest for the present discussion, with the Access Resource and Admission Control Function (A-RACF) functional entity of the RACS. The A-RACF functional entity, among other things, receives information about the IP address allocated to a particular user and maps that IP allocation to physical resources in the access network. Each A-RACF is, in these exemplary embodiments, associated with a Session Border Controller (SBC). An SBC interacts directly with the network elements that provide communication services to an end user, e.g., Digital Subscriber Line Access Multiplexers (DSLAMs).

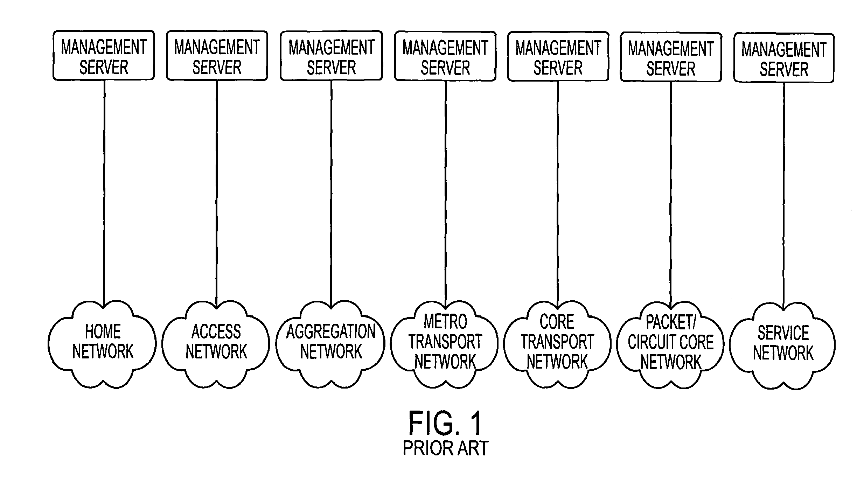

Network management of communication systems has typically been based on a siloed structure which provides a dedicated management system for each network type as shown in Figure 1. The converged NGN networks described above (and other networks) are intended to be integrations of many different network types, each of which may itself include, for example, hundred of thousands of network elements, network diagnostics. Thus, management of such networks using, e.g., the siloed structure of Figure 1 becomes tremendously complex given that the network and its components are themselves highly self-configurable, dynamically adaptable to real-time conditions and highly autonomous. Moreover, the architectural evolution of these networks is characterized by the abandonment of so-called "stovepipe" architectures in favor of service oriented architecture, in order to isolate changes and states from a service perspective and to hide operational specifics within a network domain.

Accordingly, siloed management of communication systems suffers from a number of limitations and problems including, for example: that exponential growth in management requirements (frequent network changes, dynamic routing, differentiated services, new problems like service degradation) makes service management more difficult; a lack of control of self-deployment and self-configuration aspects in policy enabled systems; lack of a standard way to track what is happening in policy based system such as NGN networks; that the end service can span multiple technologies and multiple domains; increasing need for multiple technologies to interact and be provided as seamless services (e.g., voice and Internet); current management information content is typically not fine grained enough to enable end-to-end service management; a lack of automatic diagnostics for end-to-end network problems; a lack of an automatic audit trail of end-to-end automated network activities; a lack of automatic linking of service problems to network problems; a lack of sound drill down method from an end-to-end view (e.g., a call) to local views (e.g., multiple connections that make the call); a lack of a method to capture generalized service path tracing; a lack of techniques for call path tracing without formal representation; a lack of a formal framework to manage policies; a lack of a formal method of managing policies related of aspects of Service Level Agreements (SLAs); and a lack of formal representation of attempted and unsuccessful configuration.

Accordingly, recent work in this area has focused on the possibility to develop so-called autonomous or self-organizing networks, wherein the network itself shall bear the responsibility for handling many of these tasks and functions and the operator's human staff/monitoring equipment shall bear fewer such responsibilities. However, functional mechanisms for actually rendering such closed-loop control in autonomous or self-organizing networks are currently lacking.

Thus, it would be desirable to provide systems and methods for managing dynamic policy enabled communications systems which address the afore-described problems and drawbacks.

## SUMMARY

Self-organizing networks, and mathematical objects for enforcing policies associated with such networks, are enabled by amalgamating situation semantics with action logic. This provides, among other advantages, for such networks to adapt their policies to changing circumstances without the requirement for manual or operator intervention.

According to an exemplary embodiment, a method for managing policy enforcement in a communications network includes storing instances of policy enforcement in the communications network as management infons. At least one of the stored management infons is a mathematical object containing semantic information content and reactive decision logic for triggering a management action. Policy enforcement in the communications network is then managed using the stored management infons.

According to another exemplary embodiment, a network node includes a processor for transmitting and receiving information and a memory device for storing management infons associated with policy enforcements. At least one of the management infons is a mathematical object containing semantic information content and reactive decision logic for triggering a management action, e.g., a dynamic management infon.

According to yet another exemplary embodiment, a communication system includes an infon repository which stores a plurality of management infons, wherein some of the plurality of management infons are static management infons containing semantic information content, and some of the plurality of management infons are dynamic management infons containing both semantic information content and reactive decision logic for triggering a management action associated with the communication system. The system also includes a transceiver for receiving and transmitting signals, and a processor for controlling the transceiver using the plurality of management infons.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 illustrates a conventional, stovepipe type of management architecture;

Figure 2 illustrates a non-stovepipe type of management architecture;

Figure 3 illustrates a non-stovepipe type of management architecture which includes a situation engine according to an exemplary embodiment;

Figure 4 illustrates reference points associated with interfaces between a situation engine, a policy server and a policy enforcer according to an exemplary embodiment;

Figure 5 depicts a relationship between a service, policies, management infons and a management situation according to an exemplary embodiment according to an exemplary embodiment;

Figure 6 is an exemplary embodiment illustrating a correspondence between aggregation points in a broadband network and management infons;

Figure 7 illustrates an NGN network including a management infon repository according to an exemplary embodiment;

Figures 8(a) and 8(b) conceptually illustrate static situation semantic applications and dynamic situation semantic applications, respectively;

Figure 9(a) illustrates an application of dynamic situation semantics in the context of exemplary management infons and management situations according to an exemplary embodiment;

Figure 9(b) illustrates the resultant dynamic management situation after an event triggered action according to an exemplary embodiment;

Figure 10 is a conceptual diagram illustrating an event which is outside of existing management situations that may trigger changes in the model according to an exemplary embodiment;

Figure 11 is a flowchart illustrating a method for managing policy enforcement according to an exemplary embodiment; and

Figure 12 illustrates a network node for generating and/or storing management infons according to an exemplary embodiment.

## DETAILED DESCRIPTION

The following description of the exemplary embodiments of the present invention refers to the accompanying drawings. The same reference numbers in different drawings identify the same or similar elements. The following detailed description does not limit the invention. Instead, the scope of the invention is defined by the appended claims.

These exemplary embodiments provide methods and systems for managing information, e.g., policies or workflows that control network resources in, for example, a large communication network (e.g., cellular networks, etc.). As will be described below, these exemplary embodiments are based on the application of situation semantics theory in the area of information management, generally and, more specifically according to one exemplary embodiment, to amalgamating situations semantics theory with action logic to enable dynamic policy or workflow based network management and control. For example, some embodiments describe a dynamic management paradigm which is applicable to any self-managing system, such as autonomous or self-organizing networks (SONs), e.g., certain NGN or LTE networks, through policy or workflow rules which include action components.

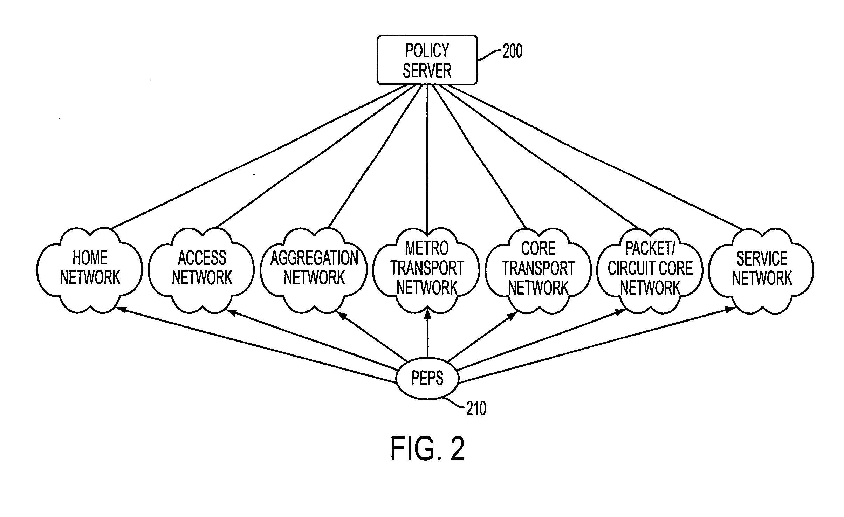

Taking this more specific example first, NGN networks are typically designed to be policy enabled in order to provide easier operations and maintenance. For example, IMS and TISPAN network reference models include policy frameworks. According to exemplary embodiments, by using the dynamic policy or workflow management tools described below, it becomes possible to overcome stove pipe architecture boundaries and enable unified management and control for converged networks as illustrated conceptually in Figure 2. Therein, Policy Decision Points (PDPs), which can be implemented as policy servers 200, are described in TISPAN networks as, for example, the Network Attachment Subsystems Architecture (NASS), the Access Resource and Admission Control Function (A-RACF) and the Service-based Policy Decision Function (SPDF). The RACS provides generic policy-based transport control services to applications as well as admission and gate control functionality. Policy Enforcement Points (PEPs) 210 are switching and routing transport components which can, for example, include TISPAN components such as the Resource Control Enforcement Function (RCEF). In the same way the standard 3GPP Policy Charging and Control (PCC) (3GPP TS 23.203, "Policy and Charging Control Architecture," Rel. 8.) provides a centralized policy management for access control and QoS control per subscriber and service basis. In the PCC architecture the PCRF (Policy and Charging Rules Function) is the combination of 3GPP R6 CRF (Charging Rules Function) and PDF (Policy Decision Function) functions, harmonizing the service based policy control and flow based charging functions.

To provide some context, policy-based management is an enabling technology for dynamic and global control of large scale distributed system through rule-based policies. Policy-based management has, for example, been introduced in the Internet Engineering Task Force (IETF) to automate the network configuration process. The IETF management architecture introduces new elements in the network, some of which are shown in Figure 2: the policy server 200 (also referred to as a Policy Decision Point (PDP)), the policy client 210 (also referred to as a Policy Enforcement Point (PEP)) and the policy repository (not shown in Figure 2) where the policies are stored. A policy transport protocol called the Common Open Policy Service (COPS) has been defined in RFC 2748 to support the interaction between the PDP 200 and its controlled PEPs 210. This management framework has been also adopted by, for example, standards bodies such as 3GPP, 3GPP2 and ETSI TISPAN with various differences regarding the interface between the PDP and the PEP.

In, for example, networks employing the "stove pipe" architecture of Figure 1 for network policy management and enforcement, it has been common to employ syntactical approaches toward managing the resulting information, e.g., using rule-based, action-based, case-based, model-based or probability based reasoning techniques. Such syntactical approaches, which focus on the form of the information rather than its meaning, are limited by, for example, the capability of the underlying syntax to capture the complexity of the information being managed and to, in effect, anticipate the types of management computations which may be desirable in the future to appropriately manage highly complex communication systems, such as NGN or 3GPP networks.

By way of contrast, these exemplary embodiments take a semantical approach toward managing information, e.g., relating to policy enforcement in communication networks. Using such a semantical approach, the meaning of the information being managed becomes part of what is captured and used to perform computations. For example, a data point's context and relationships can be captured and manipulated. Thus, these exemplary embodiments exploit a semantical approach referred to as "situational semantics" to manage information which is then combined with action logic to provide a dynamic tool for, e.g., autonomous communication network management. To better understand such situational semantical approaches as they are used in exemplary embodiments, a brief discussion of information theory and situational semantics follows.

The theory of information as developed by Shannon is purely syntactical, see, e.g., Shannon, C.E., "A Mathematical Theory of Communication", The Bell System Technical Journal, Vol. 27, pp. 379-423, 623-656, July, Oct. 1948. Various semantical approaches have been developed, such as the approach proposed by Camap in "Meaning and Necessity", University of Chicago Press, 1947, which was based on a version of possible worlds semantics to explain the system of intension and extensions. Hintikka explored the logic of knowledge and belief within a version of the possible worlds framework in Hintikka, J., "Knowledge and belief: an introduction to the logic of two notions", New York: Cornell University Press, 1962. More recent works introduced situation semantics in the early 1980s, for example, Barwise, Jon and Perry, John, "Situations and Attitudes", Cambridge, MA 1983, and Barwise, Jon, "The Situation in Logic", Stanford, 1988, which describe situation semantics as a mathematical theory of linguistic meaning. Development of situation semantics into a formal mathematical model of information flow through complex systems has been described by, for example, Jon Barwise and Jerry Seligman in "Information Flow. The Logic of Distributed Systems", Journal of Logic, Language and Information Volume 8, Number 3 / July, 1999.

A significant feature of the situation semantics model is the notion of an information channel which is capable of preserving information as it is transmitted through a complex, causally interacting system. The basic ontology includes:

- individuals, denoted by a, b, c...
- relations, denoted by P, Q, R...
- spatial locations, denoted by 1,1',1"...
- temporal locations, denoted by t, t', t"
- situations, denoted by s, s', s"...
- truth values: 1 (true) and 0 (false)

An "infon", or state-of-affair, as used in the situation semantic model and the exemplary embodiments described below is a computationally viable unit of semantic information content, i.e., a mathematical object used in situation semantics. An exemplary infon includes, for example, a relation, individuals, location, time and a polarity (i.e., a truth value) and can be expressed as:

$$(1) \quad <<R, a1, \ldots, an, l, t, 1>>$$

For example, a simple infon can convey that certain objects stand in some relation or, alternatively, do not stand in that relation. Various examples of infons used, for example, to express relations between managed objects associated with dynamic policy or workflow enforcement in communications networks are provided below.

Another feature of situation semantic models is the "situation". A situation is another unit of information which is defined in such models to be a set or chain of infons. A characteristic of situation semantics theory is that the meaning (or semantics) is contextual, i.e., the meaning of an infon depends on a situation. The following proposition indicates that s supports φ:

$$(2) \quad s \models \varphi$$

this means that s is the real situation that makes the infon φ factual. In the context of situation semantic models or semantic methods for processing information, information relates to a situation, i.e., the context of the data. Situations are partial, in contrast with possible worlds which are total-- this means they capture a part of the universe or a scene involving some individuals, relations, location and time. As with infons, various examples of situations as they can be applied to managing information, generally, and policy enforcement, more specifically, are provided below.

The objects of the situation semantic theory can be typed thereby allowing the building of complex entities. Examples of types are geographic locations (LOC), temporal locations (TIM), individuals (IND), situation (SIT) and n-place relations ($REL^n$). The following example provides a new type by type abstraction using parameter absorption:

$$(3) \quad [\lambda x \mid s \models I]$$

Thus, equation (3) represents the type of x for which situation s supports the infons in the set of infons I. Parameter absorption in situation semantics theory is analogue of λ-abstraction (i.e., anonymous function of λ-calculus). From a computational perspective, situation semantics provides an informational approach to formal semantics where soundness and completeness are mathematically proven, see, e.g., Juan Barba Escriba, "Two Formal Systems for Situation Semantics", Notre Dame Journal of Formal Logic, Vol. 33, Number 1, 1992.

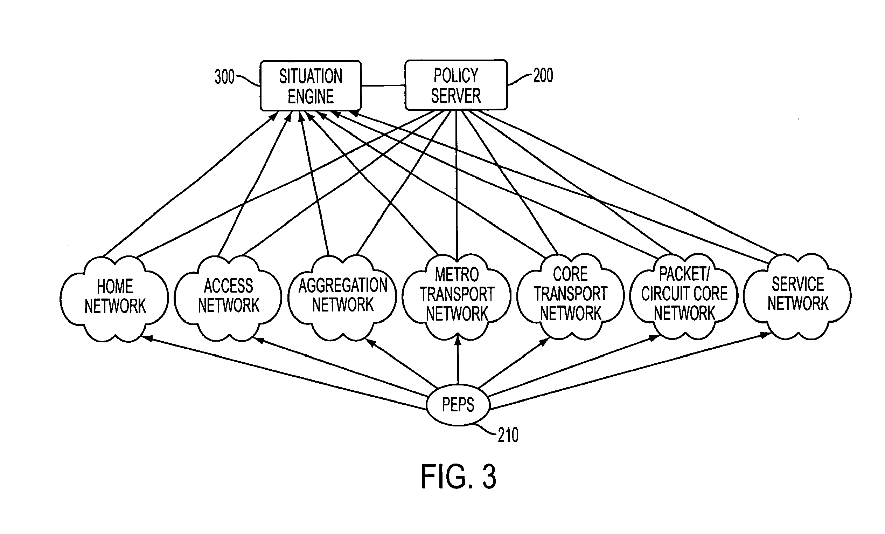

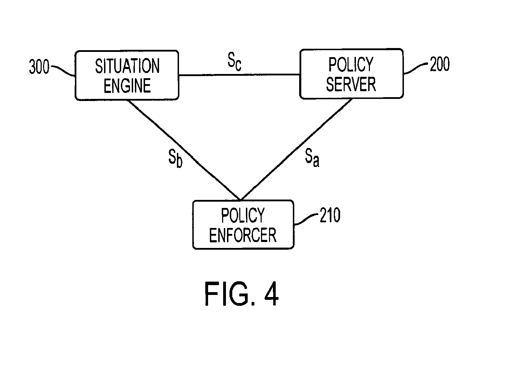

Exemplary embodiments apply such situation semantics to the management and processing of information outside of the context of linguistics and, in particular, extend situation semantics to employ action logic. Some exemplary embodiments will first be described with respect to the management and processing of information associated with communication networks, e.g., policy enforcement information. However, it will be appreciated that the present invention is not limited thereto. At a conceptual level, the application of situation semantics in the context of policy based network management can be illustrated as shown in Figure 3. Therein, a situation engine 300 provides a framework and mechanism for representing states-of-affairs using situation semantics for both successful policy enforcements in the illustrated network and, also, attempted but unsuccessful policy enforcements. The management situation semantics reference model according to this exemplary embodiment provides an extension of the afore-described policy based management model as shown in Figure 4. Therein, $S_a$ is the reference point that defines the interface between the policy server(s) 200 and the policy enforcer(s) 210. Reference point Sa can, for example, be implemented as COPS (3GPP R5 - Gq/Go), Diameter (3GPP R8 Rx/Gx, 3GPP2 Tx/Ty, ITU-T Rs/Rw) or H.248 (TISPAN Gq'/Ia).

Similarly, $S_b$ is the reference point that defines the interface between the policy enforcer(s) 210 and the situation engine 300 and $S_c$ is the reference point that defines the interface between the policy server(s) 200 and the situation engine 300. Both the $S_b$ and $S_c$ interfaces provide policy enforcement information in the format of management infons according to these exemplary embodiments. In some exemplary architectures, a policy server 200 may control many policy enforcers 210 which notify that policy server 200 of policy enforcement results. In such exemplary embodiments, the policy server 200 can inform the situation engine 300 by providing it with management infons reflecting the policy enforcement results. According to other exemplary embodiments, the policy server 200 may, for example, be a PEP for another policy server (not shown) in the case of a network which is controlled with hierarchical policies.

The application of situation semantics to the management and processing of information according to these exemplary embodiment results in, among other things, the generation of, storing of and operations on, management infons. A management infon is a state-of-affair in network management. In some examples provided below, management infons are described which correspond to policy enforcements. The management infon states or conveys that a plurality of management objects in a network element (e.g., 3GPP MOs, TISPAN MOs, etc.) either stand in a particular relation or do not stand in that particular relation. The management objects (MOs) represent any network resources (e.g., network nodes, service nodes, time, etc.) and can, for example, include elements of the Network Resource Model (e.g., 3GPP/3GPP2 NRM) or the Management Information Base (e.g., IETF MIB). Additionally, management infons according to these exemplary embodiments may represent positive or negative states-of-affairs. This means that management infons can represent attempted and unsuccessful policy actions, i.e., actions that were not enforced for various reasons such as network conditions, e.g., congestion, etc., as well as successful policy enforcements.

Consider the following example of a management infon according to an exemplary embodiment. In this example, a management infon includes a relation, a plurality of MOs associated with a communications network which are related by the relation, and a polarity, and can be represented as:

$$\text{(4)} \ll \text{streaming, Said, MusicServer; yes} \gg$$

$$\text{(5)} \ll \text{streaming, Said, Yassir, MusicServer; yes} \gg$$

Management infon (4) states that two managed objects (i.e., a user (Said) and a Music Server) are related by a relation called streaming. Similarly, management infon (5) states that three managed objects are related by the streaming relation.

Management infons according to these exemplary embodiments can take various forms. For example, arguments of a management infon may be parameterized, as shown in exemplary infon (6):

$$\text{(6)} \ll \text{streaming, x, MusicServer; yes} \gg$$

Parameterized roles can be associated to individuals or managed objects. For example, management infon (6) becomes similar to management infon (4) if x is associated with Said. Likewise, parameterized infons can be restricted by other parameterized infons, as in management infon (7), where the subject role for the property of streaming is restricted to individuals who are subscribers:

$$(7) \quad << \text{streaming}, x_{<< \text{subscriber}, x; \text{yes} >>}; \text{yes} >>$$

Moreover, properties and relations can be produced from parameterized infons by absorbing parameters as illustrated below:

$$(8) \quad [\lambda x \mid << \text{streaming}, x, \text{MusicServer}; \text{yes} >>]$$

where management infon (8) corresponds to the property of streaming music.

A management situation according to these exemplary embodiments is an infon chain which describes, e.g., policy events, in which the infons in the chain are anchored to, or associated with, a particular end-to-end (e2e) service. Note that the meaning of e2e is contextual and can, for example, refer to the end-user of the service or an "end" with respect to any network service or a component of the network service (e.g., a transport network service). Each particular context is determined by a set of infons that set a particular view of the service. Thus, a plurality of management infons linked together form a management situation data structure, wherein the plurality of management infons jointly model a service provided by a network. For example, if the service spans two domains within a network, a corresponding management situation can be generated by management infons from nodes within the two domains upon provisioning of the service. The management situation data structure can be stored in a computer-readable medium, as described below.

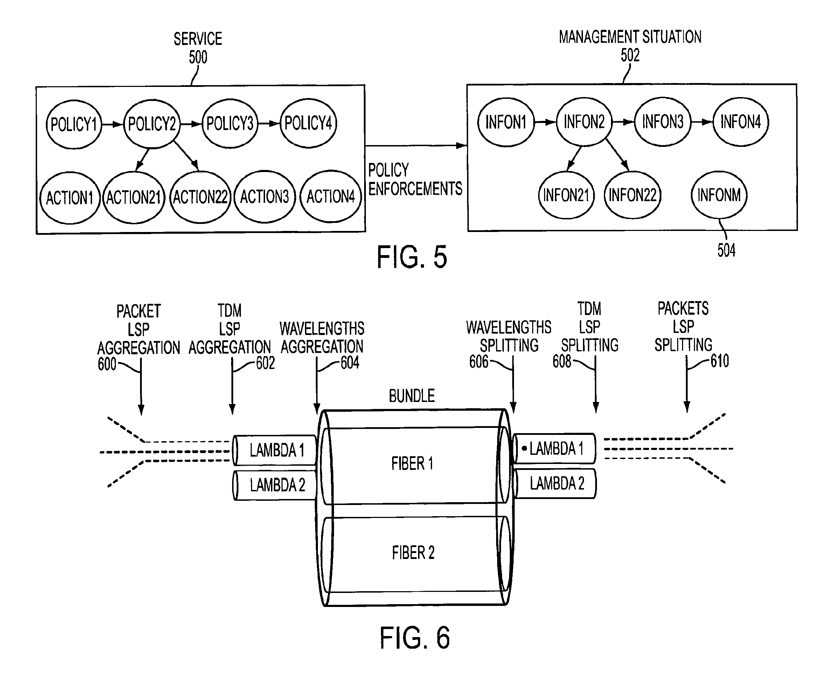

An exemplary relationship between a service, policies and a management situation according to an exemplary embodiment is shown in Figure 5. Therein, it can be seen that a particular service 500 has policies and actions associated therewith. When these policies are enforced, they result in the generation of corresponding infons which are associated with the management situation 502 that corresponds to service 500. The generation of infons within block 502 can be performed by the situation engine (which can also be called an infon engine) 300. For example, as shown in Figure 5, Policy 1 triggers one action (action1) which, in turn, generates a corresponding management infon (infon1). Policy2 triggers two actions (action21 and action22) which, in turn, generate a composite management infon (infon2) which is made of two infons (infbn21 and infon22). Similarly, in this example, Policy3 triggers one action (action3) and then one infon (infon3) and Policy4 triggers one action (action4) and then one infon (infon4). Such policies can be associated with their respective management situations, e.g., for service monitoring purposes, as shown conceptually in the Figure 5 where the monitoring rule is embedded in the management situation 502 as infon M 504. More detailed examples of such infons for implementing monitoring rules are provided below.

To further understand the usage of dynamic management infons and management situations to this exemplary embodiment of policy management in a communication network, consider the following example of a policy-enabled broadband optical communication network which includes many different nodes with different capabilities. These nodes provide, for example, fiber switching capability (FSC), e.g., nodes such as fiber cross-connects, lambda switching capability (LSC), e.g., nodes such as optical cross-connects, time-division-multiplex capability (TDMC), e.g., nodes such as SONET cross-connects, Layer 2 packet switching capability (PSC), e.g., MPLS routers or ATM switches, and Layer 3 packet switching capability (PSC) e.g., IP routers. In this exemplary network a service is offered which is called "Set up a Packet LSP", wherein the acronym LSP refers to Label Switched Path, i.e., a path defined in the context of MPLS or GMPLS technologies. An instance of this service will be associated with a management situation called packetLSP.

As shown in Figure 6, this exemplary network has a plurality of different aggregation points. Suppose that the first aggregation point 600 is implemented as an ATM cross connect that enforces an aggregation policy of music streaming flows on a dedicated LSP. The corresponding management infon can be expressed as:

$$(9) \quad I_1 = << \text{aggregation}, \text{LSP1}, \text{ATM\_MOC}; \text{MusicUsers\_MOC}_{[x \mid << \text{streaming}, x,}$$

$$\text{MusicServer; yes} >>], \text{yes} >>$$

where MusicUsers_MOC is the managed object that represents flows of music streaming users. At the second aggregation point 602, there is, for example, a first photonic switch which enforces an aggregation policy on LSC LSP. The corresponding management infon can be expressed as:

$$(10) \quad I_2 = \;<< \text{aggregation, LSP2, Lambda\_IOC, yes}>>$$

The third aggregation point is associated with a second photonic switch which enforces an aggregation policy on FSC LSP. The corresponding management infon for this aggregation point can be expressed as:

$$(11) \quad I_3 = \;<< \text{aggregation, LSP3, Fiber\_IOC, yes}>>$$

The corresponding management situation packetLSP is the chain of the three management infons (9)-(11), i.e.,:

$$\text{packetLSP} = \;<< I_1, I_2, I_3 >>$$

This management situation provides the service trace path of all users that are streaming music in this optical broadband network. An impairment in either an LSC LSP or in an FSC LSP can be traced back to the impacted users by the situation engine 300 (sometimes also referred to herein as the infon engine). A similar set of management infons and corresponding management situation can be generated for the splitting points 606, 608 and 610 in the network of Figure 6.

According to another exemplary embodiment, the management situation packetLSP described above can be associated with supervision rules that monitor the network impairments like delay, loss, and jitter. For example, such an exemplary embodiment can be enhanced by adding the dynamic infon $I_4$:

$I_4$= (LSPmonitoring, monitor packet loss and packet delay per LSP for voip traffic and issue a workflow infon to test the voice connectivity and quality between the involved Media Gateways (MGW)). The management situation according to this exemplary embodiment then becomes:

$$\text{packetLSP} = \;<< I_1, I_2, I_3, I_4 >>$$

A rule can be associated to a single infon. For example a supervision rule called $i_{3'}$ can be added to the infon $i_3$ to monitor the physical layer parameters measured within SFP (Small form factor pluggable) modules in order to detect degradations of optical link quality. Thus, infon $I_3$ can be modified to become, for example:

$$(11) \quad I_{3'} = \;<< I_3, \text{SFPmonitoring, LSP3, Fiber\_IOC, monitor optical link quality (e.g.}$$

$$\text{Temperature, Supply voltage, Laser current, Optical output power at Tx, Optical input}$$

$$\text{power at Rx)} >>$$

To provide another example of the usage of dynamic management infons and management situations according to these exemplary embodiments, consider an access and a core network which are operated with an adaptive QoS provisioning system based on a model called DiffServ. Applications which provide service on this access and core network will have different quality levels. The policy server 200 may decide upon congestion and business rules to downgrade certain application traffic classes from a higher class to a lower class. Since the DiffServ model provides only a statistical guarantee of QoS, if there is no reservation of resources in the network, the deployment of situation semantics based management according to these exemplary embodiments will facilitate analysis of the end-to-end QoS status of certain critical services from local policy enforcements using management infons such as the following:

$$(12) \quad << \text{voip, user1, DSCPMarker(EF), Router1;t1, yes} >>$$

$$(13) \quad <<\text{voip, user2, DSCPMarker(EF), Router1, t1, no}>>$$

$$(14) \quad <<\text{voip, user2, DSCPMarker(AF32), Router1, t1, yes}>>$$

$$(15) \quad <<\text{voip, user1, DSCPMarker(AF42), Router1, t2, yes}>>$$

$$(16) \quad <<\text{voipMonitoring, compute the voip service quality for gold users }>>$$

Management infon (12) is an infon that corresponds to the set up of a per-hop-behavior (PHB) configuration for a voice-over-IP (VoIP) service. The Expedited Forwarding PHB (EF) provides the user with a guaranteed minimum percentage of the link that will be allocated to his or her VoIP connection, which is a useful quality control feature for real time applications that require a guarantee on the delay and jitter, like telephony service. Management infon (13) states that user2 was not able to obtain a PHB configuration with Expedited Forwarding value. This latter infon provides an example of how management infons according to these exemplary embodiments provide a computationally viable mechanism for capturing negative relations as well as positive relations. Negative relations are desired but not realized while position relations are realized.

Management infon (14) states that another policy triggered the PHB configuration to Assured Forwarding (AF). The Assured Forwarding PHB (AF) specifies four classes of traffic, and each of those classes is guaranteed a minimum amount of bandwidth and buffering, which guaranteed amount is better than the common best-effort service, providing low packet loss within a given traffic rate, but making minimal guarantees about latency of the packets. Within each AF class, there are three drop precedences. Management infon (14) conveys the information that user2 gets AF32 (i.e., which indicates AF class 3 with a medium drop precedence). Management infon (15) states that, at a later point of time t2, a policy has been activated, e.g., following a network congestion, which has downgraded user1 to AF42 (AF class 4 with medium drop precedence. Management infon (16) adds an exemplary supervision rule to the management situation. This rule will enable the dynamic generation of infons, thereby providing voip service quality for Gold users according to this exemplary embodiment.

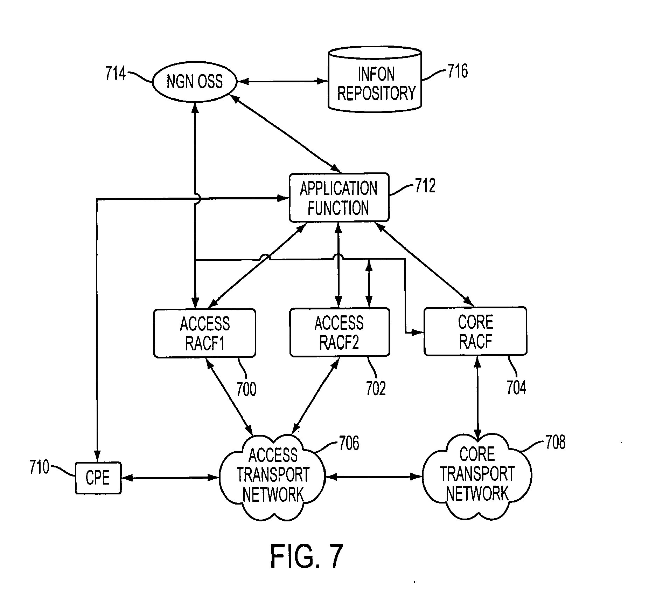

Having provided some specific examples of management infons and management situations according to exemplary embodiments, the focus now returns to higher level aspects of these exemplary embodiments. NGN architecture enables policy control as shown in, for example, Figure 7. Therein, multiple instances of RACFs 700, 702 and 704 may exist since the access network 706 and/or the core network 708 may be made of multiple domains, each having their own RACF. A consumer premises equipment (CPE) 710 is provided with various services by one or more application functions 712. According to exemplary embodiments, the NGN Operations Support System (OSS) 714 can be enriched by the situation semantics engine described above to manage the policies enforced in the network by the RACF (Resource and Admission Control Functionality). For that purpose the TISPAN Management Information Model (MIM), which models all relevant TISPAN NGN management entities, can be evolved to include the afore-described management situation semantics model. In such context, management situations could, for example, each comprise a set of management infons issued by the PEPs of the access transport network and the PEPs of the core transport network, which describe an end-to-end service behavior in the network. The management infons could, for example, be stored in an infon repository 716.

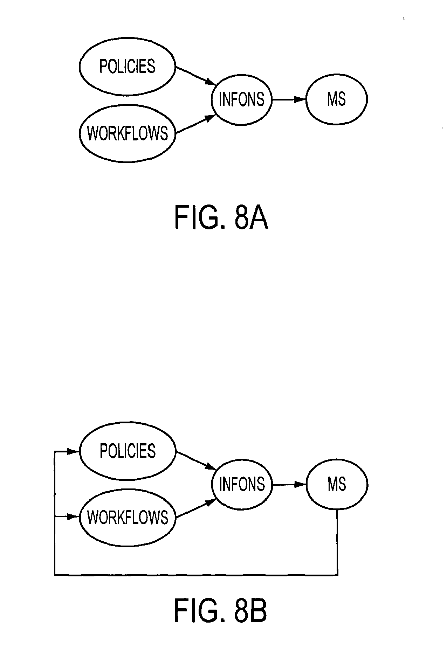

As mentioned above, static situation semantics which can be used to, for example, enforce some types of policies and workflows in radiocommunication systems can also be used as part of a mathematical model of policies, their environments, and interactions between the policies and their environments. However, some such policy environments suggest a need for a dynamic characteristic to be provided for the policy enforcement. This difference between a static usage of situation semantics, and a dynamic one, is illustrated conceptually in Figures 8(a) and 8(b), respectively, wherein control feedback from the management situation provides dynamicity to the model in Figure 8(b). According to these exemplary embodiments, such mathematical models are based on a declarative semantics with compositionality, dynamicity and self management capabilities. As will be described below by some further examples, this involves adding a way to represent information regarding the afore-described management situation's states and the manner in which these states change by the execution of actions.

To model the dynamic management situation according to exemplary embodiments, various action logic artifacts can be added to semantic situations theory. First, an artifact is added which is a new type of individual that will be permissible as part of an infon, referred to herein as an "actor", and which can be used to model an actor in charge of a surveillance process that is used to provide input regarding action triggering. Second, an artifact is added which is a set of rules that will be permissible as part of an infon that will trigger actions on the network based on certain conditions and events in the management situation context. To provide a purely illustrative example, actors in this context could be shadow routers and the rule set could be a script that computes e2e delay between the shadow routers. Then a communication system policy enforcement system could be setup to, for example, model two different services, e.g., (1) a first service with a strong requirement that delay should be monitored and (2) a second service without such a requirement.

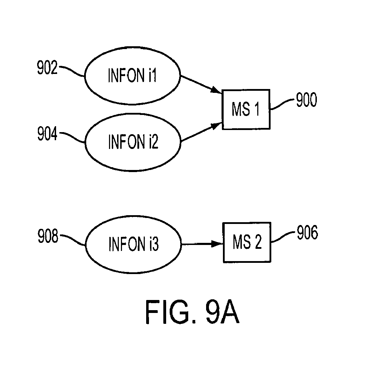

For example, as shown graphically in Figure 9(a), a first management situation MS1 900 is fed infons i1 902 and i2 904 which can be expressed as:

i1= (mplsVPNSignalling, Site1, Site2, Site3, t, true)
i2= (activeMonitoringDelay, ShadowRouter1, ShadowRouter2, ShadowRouter3, Every 5mn, compute e2eDelay between Shadow Routers, When e2e delay more than threshold IF traffic is Medium THEN Action_On_Network)

In this example, the rule in infon i2 904 is local to MS1 900. Management situation MS1 = {i1, i2} and models the first service described above with a strong requirement for delay monitoring. Infon i2 904 provides an example of the afore-described amalgamation of static situation semantics with active logic according to these exemplary embodiments. MS2 906, on the other hand, models the second service which lacks the delay monitoring requirement of MS1 900. In this example, the management situation MS2 906 is fed by infon i3 which can, for example, be expressed as:

i3 = (mplsVPNOam, Site1, Site2, Site3, t, true)

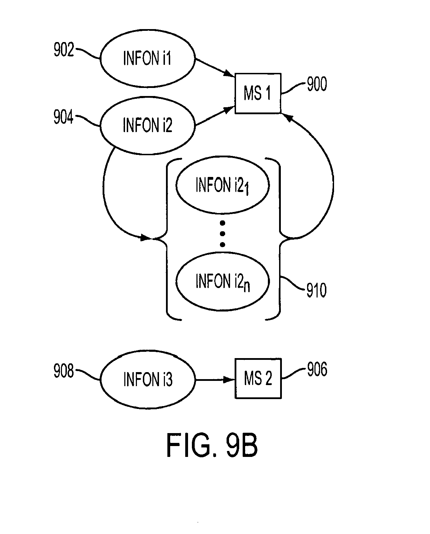

It will be appreciated that the example shown in Figure 9(a) is simplified to clearly illustrate the concept. For example, other infons could feed the two management situations in addition to those shown in Figure 9(a), e.g., individual infons associated with each of the shadow routers themselves. In the example of Figure 9(a), MS1 900 is a dynamic management situation while MS2 906 is a static management situation. This means that MS1 will be fed by other infons as result of the execution of the rules present in the dynamic infon i2. This is illustrated in Figure 9(b) by the set of infons 910 which are generated as a result of dynamic infon i2's monitoring of the delay characteristics of the system.

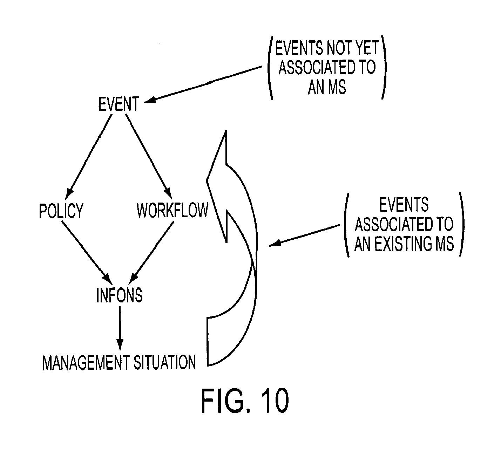

The rules which can be used to transform static situation semantics into dynamic variants thereof according to these exemplary embodiments can, for example, be reactive rules in the form: On Event... If Condition.... Do Action, where the Event parameter can be based on event algebra, some examples of which are discussed below. The triggered actions may be complex operations involving several basic actions that have to be performed concurrently or in a given order and under certain conditions. Note also that in the foregoing example, events are considered which occur within the scope of the management situation, i.e., changing attributes of the managed objects in the management situation. However, events need not be associated to any existing management situation according to other exemplary embodiments. In such cases those events will trigger policy actions or workflows to create infons and management situations (e.g., as a new call event). This concept is illustrated in Figure 10.

Thus it will be appreciated that exemplary embodiments use an intuitive yet explicit time line to describe management situations and their effects in a changing network. An advantage of the new logic described above in this context is to allow reasoning about dynamic management situations. Situation semantics theory has been amalgamated according to these exemplary embodiments with other theories that describe action logic. In such dynamic management semantics, a state is represented as a set of infons that model the management situation, and action effects as updates to these infons. In other words, a state is represented by a set of infons that model the active actor's knowledge and action effects are updates to these infons.

Numerous variations on the foregoing examples of amalgamations of situation semantics and action logic are possible. For example, many different action logics action have been proposed. One of the first proposals was described in von Wright's book Norm and Action (1963) wherein Deontic action logic is used to represent obligations over the course of time. Representation of time can be added to the action logic as well. Such an addition can be implicit (e.g., modal action logic) or explicit as in the Temporal Action Logic (TAL) that uses an intuitive explicit time line to describe actions and their effects in a changing environment. Many extensions have turned TAL into a very expressive language capable of representing, among other things, actions with durations, context-dependent and non-deterministic actions, concurrency, and action side-effects. These extensions are applicable to dynamic management situations

The rules added in the management situations according to these exemplary embodiments can, for example, model the local constraints that should be satisfied by the service at the measurement points. As long as these local constraints are satisfied, there will be no need to report monitoring information to upper management systems. This provides a framework for a distributed constraint service monitoring that allows for data filtering and reporting of only abnormal situations that affect the service quality.

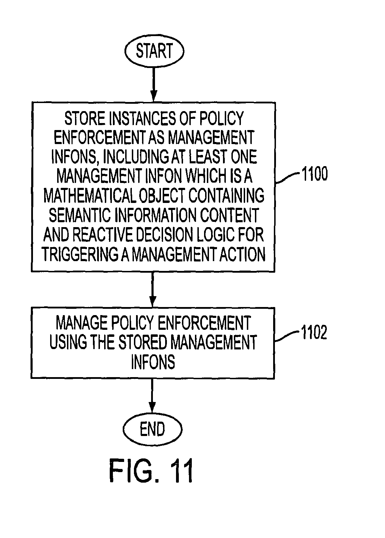

Thus, a method for managing policy enforcement in a communications network according to an exemplary embodiment can include the steps illustrated in the flowchart of Figure 11. Therein, at step 1100, instances of policy enforcement can be stored in the communications network as management infons, e.g., in infon repository 716. At least one of the management infons is a mathematical object containing semantic information content and reactive decision logic for triggering a management action. These infons can be used to manage policy enforcement in the communication network at step 1102, e.g., by performing calculations on such infons to determine whether actions have been triggered as described above.

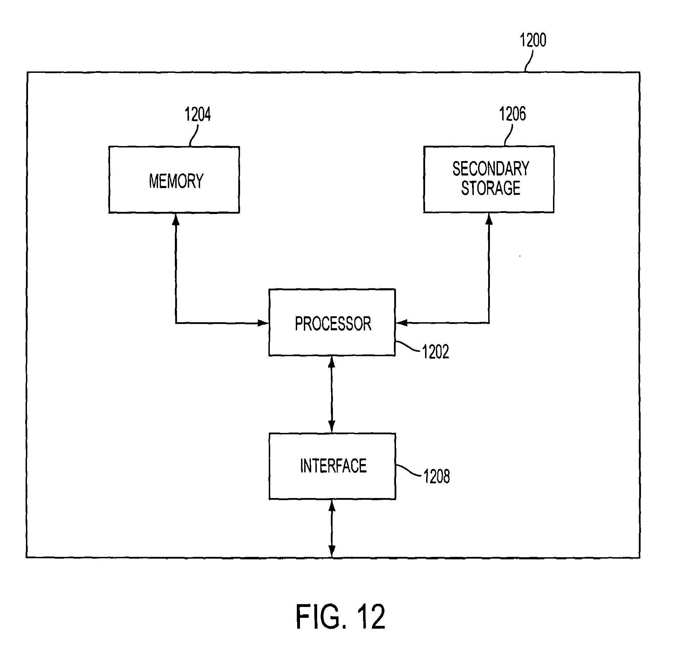

Dynamic management infons can be stored and manipulated in one or more nodes of a system, e.g., a communication system. An exemplary node 1200 will now be described with respect to Figure 12. Node 900 can include a processor 1202 (or multiple processor cores), memory 1204, one or more secondary storage devices 1206 and an interface unit 1208 to facilitate communications between network node 1200 and the rest of the network. Additionally, the node 1200 can also include protocols allowing communications over the potentially different available interfaces through which it may communicate. The memory 1204 (or the secondary storage device) can be used for storage of management infons and/or management situations, either in a database or in another manner.

Systems and methods for processing data according to exemplary embodiments of the present invention can be performed by one or more processors executing sequences of instructions contained in a memory device. Such instructions may be read into the memory device from other computer-readable mediums such as secondary data storage device(s). Execution of the sequences of instructions contained in the memory device causes the processor to operate, for example, as described above. In alternative embodiments, hard-wire circuitry may be used in place of or in combination with software instructions to implement the present invention.

The foregoing description of exemplary embodiments provides illustration and description, but it is not intended to be exhaustive or to limit the invention to the precise form disclosed. Modifications and variations are possible in light of the above teachings or may be acquired from practice of the invention. The following claims and their equivalents define the scope of the invention.

## Claims

1. A method for managing policy enforcement in a communications network comprising:

    storing instances of policy enforcement in said communications network as management infons, wherein at least one of said management infons is a mathematical object containing semantic information content and reactive decision logic for triggering a management action; and
    managing policy enforcement in said communications network using said management infons.

2. The method of claim 1, wherein said semantic information content of each management infon is partially determined by each management infon's relationship to other management infons within a management situation.

3. The method of claim 1, wherein said reactive decision logic is in the form of on event, if condition, then do action.

4. The method of claim 1, wherein each of said management infons includes a relation and a plurality of managed objects.

5. The method of claim 4, wherein at least some of said management infons include a truth value.

6. The method of claim 5, wherein at least some of said management infons include a location and a time value.

7. The method of claim 1, wherein said managing policy enforcement further comprises:

    performing calculations on said management infons.

8. The method of claim 1, further comprising:

    generating a management situation as a chain of said management infons, said situation being associated with a service provided within said communication network.

9. The method of claim 8, further comprising the step of:

> generating, by said at least one management infon, at least one new management infon as a result of said management event being triggered; and
> linking said at least one new management infon to said management situation.

10. A network node comprising
a processor for transmitting and receiving information; and
a memory device for storing management infons associated with policy enforcements which have occurred, wherein at least one of said management infons is a mathematical object containing semantic information content and reactive decision logic for triggering a management action.

11. The network node of claim 10, wherin each of said management infons is a computationally viable unit of semantic information content and wherein the semantic information content of each management infon is partially determined by each management infon's relationship to other management infons within a management situation.

12. The network node of claim 10, wherein each of said management infons includes a relation and a plurality of managed objects.

13. The network node of claim 12, wherein at least some of said management infons include a truth value.

14. The network node of claim 13, wherein at least some of said management infons include a location and a time value.

15. The network node of claim 14, with a processor for performing calculations on said management infons and wherein said performing of calculations further comprises:

> identifying, for a particular user or node within a communication network, each negative policy enforcement associated therewith.

16. The network node of claim 15, wherein said processor generates management situations as chains of said management infons, each of said situations being associated with a service provided within said communication network.

17. The network node of claim 16, wherein said processor generates, using said at least one management infon, at least one new management infon as a result of said management event being triggered, and links said at least one new management infon to said management situation.

18. A communication system comprising:

> an infon repository which stores a plurality of management infons, wherein some of said plurality of management infons are static management infons containing semantic information content, and some of said plurality of management infons are dynamic management infons containing semantic information content and reactive decision logic for triggering a management action associated with said communication system;
> a transceiver for receiving and transmitting signals;
> a processor for controlling said transceiver using said plurality of management infons.

19. The communication system of claim 18, wherein one of said dynamic management infons includes a monitoring rule for monitoring a network parameter associated with said signals and further wherein said processor controls said transceiver based, at least in part, on application of said monitoring rule.

EP 2 273 725 A2

| MANAGEMENT SERVER | MANAGEMENT SERVER | MANAGEMENT SERVER | MANAGEMENT SERVER | MANAGEMENT SERVER | MANAGEMENT SERVER | MANAGEMENT SERVER |

HOME NETWORK

ACCESS NETWORK

AGGREGATION NETWORK

METRO TRANSPORT NETWORK

CORE TRANSPORT NETWORK

PACKET/ CIRCUIT CORE NETWORK

SERVICE NETWORK

**FIG. 1**
PRIOR ART

POLICY SERVER 200

SERVICE NETWORK

PACKET/ CIRCUIT CORE NETWORK

CORE TRANSPORT NETWORK

METRO TRANSPORT NETWORK

AGGREGATION NETWORK

ACCESS NETWORK

HOME NETWORK

PEPS 210

FIG. 2

FIG. 3

EP 2 273 725 A2

FIG. 4

SERVICE
500

MANAGEMENT SITUATION
502

POLICY
ENFORCEMENTS

504

FIG. 5

PACKET
LSP
AGGREGATION
600

TDM
LSP
AGGREGATION
602

WAVELENGTHS
AGGREGATION
604

WAVELENGTHS
SPLITTING
606

TDM
LSP
SPLITTING
608

PACKETS
LSP
SPLITTING
610

BUNDLE

LAMBDA 1

LAMBDA 2

FIBER 1

•LAMBDA 1

LAMBDA 2

FIBER 2

FIG. 6

FIG. 7

FIG. 8A

FIG. 8B

FIG. 9A

FIG. 9B

FIG. 10

START

STORE INSTANCES OF POLICY
ENFORCEMENT AS MANAGEMENT
INFONS, INCLUDING AT LEAST ONE
MANAGEMENT INFON WHICH IS A
MATHEMATICAL OBJECT CONTAINING
SEMANTIC INFORMATION CONTENT
AND REACTIVE DECISION LOGIC FOR
TRIGGERING A MANAGEMENT ACTION
— 1100

MANAGE POLICY ENFORCEMENT
USING THE STORED MANAGEMENT
INFONS
— 1102

END

# FIG. 11

1200

1204

MEMORY

1206

SECONDARY
STORAGE

PROCESSOR

1202

INTERFACE

1208

FIG. 12

# EP 2 273 725 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Shannon, C.E.** A Mathematical Theory of Communication. *The Bell System Technical Journal,* July 1948, vol. 27, 379-423623-656
- **Camap.** Meaning and Necessity. University of Chicago Press, 1947
- **Hintikka, J.** *Knowledge and belief: an introduction to the logic of two notions,* 1962
- **Barwise, Jon ; Perry, John.** *Situations and Attitudes,* 1983
- **Barwise, Jon.** *The Situation in Logic,* 1988
- **Jon Barwise ; Jerry Seligman.** Information Flow. The Logic of Distributed Systems. *Journal of Logic, Language and Information,* July 1999, vol. 8 (3
- **Juan Barba Escriba.** Two Formal Systems for Situation Semantics. *Notre Dame Journal of Formal Logic,* 1992, vol. 33 (1